(19) Europäisches Patentamt
European Patent Office
Office européen des brevets

(11) EP 0 558 158 B2

(12) NEW EUROPEAN PATENT SPECIFICATION

(45) Date of publication and mention of the opposition decision:
**06.10.2004 Bulletin 2004/41**

(45) Mention of the grant of the patent:
**16.08.2000 Bulletin 2000/33**

(21) Application number: **93201186.9**

(22) Date of filing: **27.01.1988**

(51) Int Cl.7: **C07F 17/00**, C08F 4/76, C08F 10/00

# (54) Catalysts, method of preparing these catalysts and method of using said catalysts

Katalysatoren, Verfahren zur Herstellung derselben und Verfahren zur deren Anwendung

Catalyseurs, méthode de préparation de ces catalyseurs et procédé d'utilisation

(84) Designated Contracting States:
**AT BE DE ES FR GB IT LU NL SE**

(30) Priority: **30.01.1987 US 8800**
**22.12.1987 US 133480**

(43) Date of publication of application:
**01.09.1993 Bulletin 1993/35**

(60) Divisional application:
**99201939.8 / 0 949 278**
**99201940.6 / 0 949 279**

(62) Document number(s) of the earlier application(s) in accordance with Art. 76 EPC:
**91113752.9 / 0 468 537**
**88300699.1 / 0 277 004**

(73) Proprietor: **ExxonMobil Chemical Patents Inc.**
**Linden, NJ 07036-0710 (US)**

(72) Inventors:
- **Turner, Howard William**
  **Houston, Texas 77059 (US)**
- **Hlatky, Gregory George**
  **Houston, Texas 77062 (US)**

(74) Representative: **UEXKÜLL & STOLBERG**
**Patentanwälte**
**Beselerstrasse 4**
**22607 Hamburg (DE)**

(56) References cited:
**EP-A- 0 277 003** **EP-A- 0 277 004**
**US-A- 3 231 593**

- **J. AM. CHEM. SOC., vol. 108, 1986, pages 1718-1719, American Chemical Society; R.F. JORDAN et al.: "Reactive cationic dicyclopentadienylzirconium(IV) complexes"**
- **J. AM. CHEM. SOC., vol. 108, 1986, pages 7410-7411, American Chemical Society; R.F. JORDAN et al.: "Ethylene polymerization by a cationic dicyclopentadienylzirconium(IV) alkyl complex"**
- **J. CHEM. SOC., CHEM. COMMUN., 1986, pages 1610-1611; M. BOCHMANN et al.: "Synthesis and insertion reactions of cationic alkylbis(cyclopentadienyl)titanium complexes"**
- **Eur. Polymer Journal, vol. 14, 1978, pp. 965-969, J.N. Hay et al**
- **Fac. Sci., Riyadh Univ., vol. 6, 1974, pp. 124-134, R.M.S.Obaid**
- **Organomet. no. 6, 1987, pp. 2556-2563, M. Bochmann et al**
- **J.Polymer Sci., vol. 55, 1961, pp. 145-152, G.L. Karapinka et al**
- **La Chimica et L'Industria, vol. 44, 1962, pp. 235-240, W. Marconi et al**
- **J. Am. Chem. Soc., vol. 109, 1987, pp. 4127-4129, Z. Lin et al**
- **Abstracts 193rd ACS Nat. Meeting, Denver, CO, Div. Inorganic Chem., abts. no. 314, 1987, Z. Lin et al**

EP 0 558 158 B2

## Description

This invention relates to compositions of matter which are useful as catalysts, to a method for preparing these catalysts, to a polymerisation process using these catalysts. More particularly, this invention relates to catalysts for polymerising olefins, diolefins and/or acetylenically unsaturated monomers. Homopolymer and copolymer products may be produced with these catalysts.

BACKGROUND OF THE INVENTION

It has been taught or suggested that the active catalyst species for olefin polymerisation is an ion pair and particular an ion pair with a Group IV-b metal component present as a cation or a decomposition product thereof and as a cocatalyst a Lewis acid either to form or stabilise the active ionic catalyst species (see Breslow and Newburg, Long and Breslow: J. Am. Chem. Soc. 1959 Vd 81 pp 81-86 and J. Am. Chem. Soc. 1960, Vd 82 pp 1953-1957; Dyachkovskii, Vysokomol, Soyed, 1965-Vd 7 pp 114-115 and Dyachkovski, Shilova and Shilov, J. Polym. Sci. Part C 1967, pp 2333-2339; 7219-7221).

The active catalyst is, apparently, formed through a Lewis acid-Lewis base reaction of two neutral components (the metallocene and the aluminum alkyl), leading to an equilibrium between a neutral, apparently inactive, adduct and an ion pair, presumably the active catalyst. As a result of this equilibrium, there is a competition for the anion which must be present to stabilise the active cation catalyst species. This equilibrium is, of course, reversible and such reversal will deactivate the catalyst.

The articles of Long and Breslow, and Breslow and Newburg use a soluble homogeneous catalyst of bis (cyclopentadienyl) titanium dichloride and diethyl aluminumchloride, but these systems are not highly active. Recently, (see EP 69951 and EP 129368 it has been found that active Ziegler-Natta type catalysts can be formed, using bis (cyclopentadienyl) compounds of Group IV-B metals, including zirconium, hafnium and alumoxanes.

Higher activities are obtained than with the Long, Breslow and Newburg catalysts and narrower molecular weight distributions than with conventional Ziegler-Natta systems.

The Lewis acids (e.g. diethyl aluminum chloride) contemplated in the soluble catalyst systems can act as chain transfer agents. The metal alkyl cocatalyst can be pyrophonic and hazardous to use. Catalysts using alumoxane remain subject to poisoning and require an undesirable excess of alumoxane.

It is hence amongst the object of the invention to provide an improved catalyst system which avoids the use of an undesirable cocatalyst. Better control of molecular weight and molecular weight distribution, easier production of higher molecular weight polymer and larger amounts of comonomer incorporated is also desirable.

The Journal of the Chemical Society 1986 page 1610 described in an article by M. Bochmann and LM. Wilson preparation of a compound $[Cp_2Ti(CH_3)(CH_3CN)]$ $[BPh_4]$ using $Cp_2Ti(CH_3)Cl$ and $NaBPh_4$ in $CH_3CN$. $[(Indenyl)_2Ti(CH_3)(RCN)]$ $[BPh_4]$ is also mentioned. It is stated that none of the complexes react with ethylene, butadiene or acetylene under mild conditions in the absence or presence of Lewis acids.

The Journal of the American Chemical Society of 1986 Vol. 108 page 1718-1719 described in an article by R.F. Jordan, W.E. Dasher and S.F. Echols monometallic systems incorporating unreactive, non-coordinating anions involving the preparation of an ionic complex including $Cp_2ZrR^+$ using $Ag[BPh_4]$ $[CpZr(CH_3)(CH_3CN)][BPh_4]$. Ag° precipitates. $CH_3CN$ could be replaced by tetrahydrofuran (THF) to form a stable complex. It was suggested that these cationic complexes could be reactive with polyolefins.

In the Journal of the American Chemical Society Vol. 108 pages 7410-7411 R.F. Jordan. C.S. Bajgur, R. Willett and B. Scott describe use of $[CpZr(CH_3)(THF)][BPh_4]$ in ethylene polymerisation in the absence of Al cocatalyst. The purpose is to demonstrate the existence of $Cp_2M(IV)R+$ cations; labile ligands, presumably THF instead of $CH_3CN$, are used. $CH_2Cl_2$ solvent is used at 25°C and 1 to 4 atmosphere of ethylene to produce polyethylene typically having an Mw of 18400 Mz of 33000, an Mw/Mn of 2.58 at relatively low activity of 0.2 g/mmol catalyst min. atm. The THF ligand whilst labile is said to compete with ethylene. It is therefor a further object of the invention to provide an improved catalyst system which avoids formation of neutral catalytically inactive species by using anions which are more resistant to degradation.

EP patent application 91113752.9 was granted as EP-B-468537 and claims an ionic catalyst for polymerizing olefins, diolefins, and/or acetylenically unsaturated monomers, comprising: a bis(cyclopentadienyl) Group IV-B metal cation, and a compatible, bulky, non-coordinating anion of a single coordination complex having a plurality of lipophilic radicals covalently coordinated to and shielding a central, formal charge-bearing metal or metalloid atom and sufficiently labile to be displaced by a neutral Lewis base, in which the anion comprises an aryl group and is substituted on aromatic carbon atoms so as to avoid transfer of a fragment of the anion to the metal cation.

SUMMARY OF THE INTENTION

It has now been discovered that certain of the foregoing and other disadvantages of the prior art ionic olefin polymerization catalysts can be avoided, or at least reduced, with certain of the ionic catalysts of this invention and improved olefin, diolefin and/or acetylenically unsaturated monomer polymerization process provided therewith. The invention provides a catalyst for polymerizing olefins, diolefins, and/or acetylenically unsaturated monomers, comprising a cation derived from a bis(cyclopentadienyl) zirconium or hafnium compound having substitutions on the cyclopentadienyl carbon atoms, and an anion portion of a single coordination complex having a plurality of lipophilic radicals covalently coordinated to and shielding a central formal charge bearing metal or metalloid atom, which anion is compatible with and non-coordinating towards the metal cation,

the catalyst being formed from first and second components selected so as to avoid transfer of a fragment of the anion to the metal cation so forming a catalytically inactive species, the transfer being avoided by steric hindrance resulting from substitutions on the cyclopentadienyl carbon atoms with the provisos that

the catalyst is not formed from a peralkyl substituted cyclopentadienyl system and a tetraphenyl borate and

the catalyst does not comprise a non-coordinating anion substituted on aromatic carbon atoms so as to avoid a transfer of a fragment of the anion to the metal cation.

It is also amongst the objects of this invention to provide certain improved catalysts, which will yield relatively high molecular weight polymers, copolymers containing relatively large amounts of a plurality of comonomers, which comonomers are distributed in a manner at least approaching randomness. It is also amongst the objects of this invention to provide polymeric products produced with these catalysts having relatively narrow molecular weight distributions and which are free of certain metal impurities.

The catalyst is prepared by combining at least two components. The first of which components is a bis(cyclopentadienyl) derivative of a zirconium or hafnium compound containing at least one ligand which will combine with the second component or at least a portion thereof such as a cation portion thereof. The second of which components is an ion-exchange compound comprising a cation which will irreversibly react with at least one ligand contained in said zirconium or hafnium compound (first component) and an anion which is bulky and a single coordination complex comprising a plurality of lipophilic radicals covalently coordinated to and shielding a central formally charge-bearing metal or metalloid atom. The charge-bearing metal or metalloid may be any metal or metalloid capable of forming a coordination complex which is not hydrolyzed by aqueous solutions. Upon combination of the first and second components, the cation of the second component reacts with one of the ligands of the first component. The zirconium or hafnium cation has a formal coordination number of 3 and a valence of +4. The anion derived from the second compound must be capable of stabilizing the zirconium or hafnium cation complex without interfering with the zirconium or hafnium cation's or its decomposition product's ability to function as a catalyst and must be sufficiently labile to permit displacement by an olefins, diolefin or an acetylenically unsaturated monomer during polymerization. For example, Bochmann and Wilson have reported (J. Chem. Soc., Chem. Comm., 1986, pp. 1610-1611) that bis(cyclopentadienyl)titanium dimethyl reacts with tetrafluoroboric acid to form bis(cyclopentadienyl)titanium methyl tetrafluoroborate. The anion is, however, insufficiently labile to be displaced by ethylene.

The second ion exchange compound is a salt comprising a cation capable of donating a proton which will irreversibly combine with said at least one ligand (substituent) liberated by said zirconium or hafnium compound and an anion which is a single coordination complex comprising a charge-bearing metal or metalloid core.

All references to the Periodic Table of the Elements herein shall refer to the Periodic Table of the Elements, published and copyrighted by CRC Press, Inc., 1984. Also, any reference to a group or groups shall be to the group or groups as reflected in this Periodic Table of the Elements.

As used herein, the recitation "compatible non-coordinating anion" means an anion which either does not coordinate to said cation or which is only weakly coordinated to said cation thereby remaining sufficiently labile to be displaced by a neutral Lewis base. The recitation "compatible non-coordinating anion" specifically refers to an anion which, when functioning as a stabilizing anion in the catalyst system of this invention, does not transfer an anionic substituent or fragment thereof to said cation in such a way as to form a neutral four coordinate metallocene and a neutral metal or metalloid byproduct. Compatible anions are anions which are not degraded to neutrality when the initially formed complex decomposes. The recitation "metalloid", as used herein includes non-metals such as boron and phosphorus which exhibit semi-metallic characteristics.

The zirconium and hafnium compounds, useful as first compounds in the preparation of the improved catalyst of this invention are bis(cyclopentadienyl) derivatives of zirconium and hafnium. In general, useful zirconium and hafnium compounds may be represented by the following general formulae:

1. $(A\text{-}Cp)MX_1X_2$

2. $(A\text{-}Cp)M\overline{X'_1X'_2}$

3. (A-Cp)ML

4. $(Cp^*)(Cp\overline{R)M}X$

Wherein:

M is a metal selected from zirconium and hafnium;

(A-Cp) is either (Cp)(Cp*) or Cp-A'-Cp* and Cp and Cp* are the same or different substituted or unsubstituted cyclopentadienyl radicals wherein A' is a covalent bridging group which contains a Group IV-A element;

L is an olefin, diolefin or aryne ligand;

$X_1$ and $X_2$ are, independently, selected from the group consisting of hydride radicals, hydrocarbyl radicals having from 1 to 20 carbon atoms, substituted-hydrocarbyl radicals, wherein one or more of the hydrogen atoms are replaced with a halogen atom, having from 1 to 20 carbon atoms, organometalloid radicals comprising a Group IV-A element wherein each of the hydrocarbyl substitutions contained in the organic portion of said organometalloid, independently, contain from 1 to 20 carbon atoms;

$X'_1$ and $X'_2$ are joined and bound to the metal atom to form a metallocycle, in which the metal atom, $X'_1$ and $X'_2$ form a hydrocarbocyclic ring containing from 3 to about 20 carbon atoms; and

R is a substituent, preferably a hydrocarbyl substituent, on one of the cyclopentadienyl radicals which is also bound to the metal atom.

Each carbon atom in the cyclapentadienyl radical may be, independently, unsubstituted or substituted with the same or a different radical selected from the group consisting of hydrocarbyl radicals, substituted-hydrocarbyl radicals wherein one or more hydrogen atoms is replaced by a halogen atom, hydrocarbyl-substituted metalloid radicals wherein the metalloid is selected from Group IV-A of the Periodic Table of the Elements, and halogen radicals. Suitable hydrocarbyl and substituted-hydrocarbyl radicals, which may be substituted for at least one hydrogen atom in the cyclopentadienyl radical, will contain from 1 to 20 carbon atoms and include straight and branched alkyl radicals, cyclic hydrocarbon radicals, alkyl-substituted cyclic hydrocarbon radicals. aromatic radicals and alkyl-substituted aromatic radicals. Similarly, and when $X_1$ and/or $X_2$ is a hydrocarbyl or substituted-hydrocarbyl radical, each may, independently, contain from 1 to 20 carbon atoms and be a straight or branched alkyl radical, a cyclic hydrocarbyl radical, an alkyl-substituted cyclohydrocarbyl radical, an aromatic radical or an alkyl-substituted aromatic radical. Suitable organometalloid radicals include mono-, di- and trisubstituted organometalloid radicals of Group IV-A elements wherein each of the hydrocarbyl groups contain from 1 to 20 carbon atoms. More particularly, suitable organometalloid radicals include trimethylsilyl, triethylsilyl, ethyldimethylsilyl, methyldiethylsilyl, triphenylgermyl, trimethylgermyl.

Illustrative, but not limiting examples of bis(cyclopentadienyl)zirconium compounds which may be used in the preparation of the improved catalyst of this invention are dihydrocarbyl-substituted bis(cyclapentadienyl)zirconium compounds such as (monohydrocarbyl-substituted cyclopentadienyl)zirconium compounds such as (methylcyclopentadienyl) (cyclopentadienyl) and bis(methylcyclopentadienyl)zirconium dimethyl, (ethylcyclopentadienyl)(cyclopentadienyl) and bis(ethylcyclopentadienyl)zirconium dimethyl, (propylcyclopentadienyl)(cyclopentadienyl) and bis(propylcyclopentadienyl)zirconium dimethyl, [(n-butyl)cyclopentadienyl](cyclopentadienyl) and bis[(n-butyl)cyclopentadienyl] zirconium dimethyl, [(t-butyl)cyclopentadienyl](cyclapentadienyl) and bis[(t-butyl)cyclapentadienyl)zirconium dimethyl, (cyclohexylmethylcyclopentadienyl)(cyclopentadienyl) and bis(cyclahexylmethylcyclopentadienyl)zirconium dimethyl, (benzylcyclapentadienyl)(cyclopentadienyl) and bis(benzylcyclopentadienyl)zirconium dimethyl, (diphenylmethylcyclopentadienyl)(cyclopentadienyl) and bis(diphenylmethylcyclopentadienyl)zirconium dimethyl (methylcyclopentadienyl)(cyclopentadienyl) and bis(methylcyclopentadienyl)zirconium dihydride, (ethylcyclopentadienyl)(cyclopentadienyl) and bis(ethylcyclopentadienyl)zirconium dihydride, (propylcyclopentadienyl)(cyclopentadienyl) and bis(propylcyclopentadienyl)zirconium dihydride, [(n-butyl)cyclopentadienyl](cyclopentadienyl) and bis[(n-butyl)cyclopentadienyl] zirconium dihydride, [(t-butyl)cyclapentadienyl](cyclapentadienyl) and bis[(t-butyl)cyclopentadienyl]zirconium dihydride, (cyclohexylmethylcyclapentadienyl)(cyclopentadienyl) and bis(cyclohexylmethylcyclopentadienyl)zirconium dihydride, (benzylcyclopentadienyl)(cyclopentadienyl) and bis(benzylcyclopentadienyl)zirconium dihydride, (diphenylmethylcyclopentadienyl)(cyclopentadienyl) and bis(diphenylmethylcyclopentadienyl)zirconium dihydride; (polyhydrocarbyl-substituted cyclapentadienyl)zirconium compounds such as (dimethylcyclopentadienyl)(cyclopentadienyl) and bis(dimethylcyclopentadienyl)zirconium dimethyl, (trimethylcyclopentadienyl)(cyclapentadienyl) and bis(trimethylcyclopentadienyl)zirconium dimethyl, (tetramethylcyclopentadienyl)(cyclopentadienyl) and bis(tetramethylcyclopentadienyl)zirconium dimethyl, (permethylcyclopentadienyl)(cyclopentadienyl) and bis(permethylcyclopentadienyl)zirconium dimethyl, (ethyltetramethylcyclopentadienyl)(cyclopentadienyl) and bis(ethyltetramethylcyclopentadienyl)zirconium dimethyl, (indenyl)(cyclopentadienyl) and bis(indenyl)zirconium dimethyl, (dimethylcyclopentadienyl)(cyclopentadienyl) and bis(dimethylcyclopentadienyl)zirconium dihydride, (trimethylcyclopentadienyl)(cyclapentadienyl) and bis(trimethylcyclopentadienyl)zirconium dihydride, (tetramethylcyclopentadienyl)(cyclopentadienyl) and bis(tetramethylcyclopentadienyl)zirconium dihydride. (permethylcyclopentadienyl)(cyclopentadienyl) and bis(permethylcyclopentadienyl)zirconium dihydride, (ethyltetramethylcyclapentadienyl)(cyclopentadienyl) and bis(ethyltetramethylcyclopentadienyl)zirconium dihydride, (indenyl)(cyclopentadienyl) and bis(indenyl)zirconium dihydride. One can also use (metal hydrocarbyl-substituted cyclopentadienyl)zirconium compounds such as (trimethylsilylcyclopentadienyl)(cyclopentadienyl) and bis(trimethylsilylcyclopentadienyl)zirconium dimethyl, (trimethylgermylcyclopentadienyl)(cyclopentadienyl) and bis(trimethylgermylcyclopentadienyl)zirconium dimethyl, (trimethylstannylcyclopentadienyl)(cyclopentadienyl) and bis(trimethyl stannylcyclopentadienyl)zirconium dimethyl, (trimethylplumbyl cyclopentadienyl)(cyclopentadienyl) and bis(trimethylplumbylcyclopentadienyl)zirconium dimethyl, (trimethylsilylcyclopentadienyl)(cyclopentadienyl) and bis(trimethylsilylcyclopentadienyl)zirconium dihydride, (trimethylgermylcyclopentadienyl)(cyclopentadienyl) and bis (trimethylgermylcyclopentadienyl)zirconium dihydride, (trimethylstannylcyclopentadienyl)(cyclopentadienyl) and bis (trimethylstannylcyclopentadienyl)zirconium dihydride, (trimethylplumbylcyclopentadienyl)(cyclopentadienyl) and bis (trimethylplumbylcyclopentadienyl)zirconium dihydride; (halogen-substituted cyclopentadienyl)zirconium compounds such as (trifluoromethylcyclopentadienyl)(cyclopentadienyl) and bis(trifluoromethylcyclopentadienyl)zirconium dimethyl, (trifluoromethylcyclopentadienyl)(cyclopentadienyl) and bis(trifluoromethylcyclopentadienyl)zirconium dihydride; silyl-substituted (cyclopentadienyl)zirconium compounds; bis(cyclopentadienyl)zirconacycles such as bis(pentamethylcyclopentadienyl)zirconacyclobutane, and bis(pentamethylcyclopentadienyl)zirconacyclopentane, olefin, diolefin and aryne ligand substituted bis(cyclopentadienyl)zirconium compounds such as bis(cyclopentadienyl)(2,3-dimethyl-1,3-butadiene)zirconium and bis(pentamethylcyclopentadienyl)(benzyne)zirconium; (hydrocarbyl)(hydride)substituted bis(cyclopentadienyl)zirconium compounds such as bis(pentamethylcyclopentadienyl)zirconium (phenyl)(hydride) and bis(pentamethylcyclopentadienyl)zirconium (methyl)(hydride); and bis(cyclopentadienyl)zirconium compounds in which a substituent on the cyclopentadienyl radical is bound to the metal such as (pentamethylcyclopentadienyl)(tetramethylcyclopentadienylmethylene)zirconium hydride, and (pentamethylcyclopentadienyl)(tetramethylcyclopentadienylmethylene)zirconium phenyl.

A similar list of illustrative bis(cyclopentadienyl)hafnium compounds could be made, but since the lists would be nearly identical to that already presented with respect to bis(cyclopentadienyl)zirconium compounds, such lists are not deemed essential to a complete disclosure. Those skilled in the art, however, are aware that bis(cyclopentadienyl)hafnium compounds corresponding to certain of the bis(cyclopentadienyl)zirconium compounds listed supra are not known. The lists would, therefore, be reduced by these compounds. Other bis(cyclopentadienyl)hafnium compounds as well as other bis(cyclopentadienyl)zirconium compounds which are useful in the catalyst compositions of this invention will, of course, be apparent to those skilled in the art.

Compounds useful as a second component in the preparation of the catalyst of this invention will comprise a cation, which is a Bronsted acid capable of donating a proton, and a compatible noncoordinating anion. Suitable metals for the anion portion include, but are not limited to, aluminum, gold or platinum. Suitable metalloids include, but are not limited to, boron, phosphorus or silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

In general, the second compounds useful in the preparation of the catalysts of this invention may be represented by the following general formula:

$$[(L'\text{-}H)^{+}]_{d}[(M')^{m+}Q_{1}Q_{2}\cdots Q_{n}]^{d-}$$

Wherein:

L' is a neutral Lewis base;
H is a hydrogen atom;
$[L'\text{-}H]^+$ is a Bronsted acid;
M' is a metal or metalloid selected from the Groups subtended by Groups V-B to V-A of the Periodic Table of the Elements; ie., Groups V-B, VI-B, VII-B, VIII, I-B, II-B, III-A, IV-A, and V-A;

$Q_1$ to $Q_n$ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical - the remaining $Q_1$ to $Q_n$ being, independently, selected from the foregoing radicals;
m is an integer from 1 to 7;
n is an integer from 2 to 8; and n - m = d.

Second compounds comprising boron which are particularly useful in the preparation of catalysts of this invention may be represented by the following general formula:

$$[L'\text{-}H]^+[BAr_1Ar_2X_3X_4]^-$$

Wherein:

L' is a neutral Lewis base;
H is a hydrogen atom;
$[L'\text{-}H]^+$ is a Bronsted acid;
B is boron in a valence state of 3;
$Ar_1$ and $Ar_2$ are the same or different aromatic or substituted-aromatic hydrocarbon radicals containing from 6 to 20 carbon atoms and may be linked to each other through a stable bridging group; and
$X_3$ and $X_4$ are radicals selected, independently, from the group consisting of hydride radicals, halide radicals, with the proviso that only $X_3$ or $X_4$ will be halide at the same time, hydrocarbyt radicals containing from 1 to 20 carbon atoms, substituted-hydrocarbyl radicals, wherein one or more of the hydrogen atoms is replaced by a halogen atom, containing from 1 to 20 carbon atoms, hydrocarbyl-substituted metal (organometalloid) radicals wherein each hydrocarbyl substitution contains from 1 to 20 carbon atoms and said metal is selected from Group IV-A of the Periodic Table of the Elements. Suitably only X3 or X4 will be halide at any one time.

In general, $Ar_1$ and $Ar_2$ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substituents on useful substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals and the like such as those useful as $X_3$ or $X_4$. The substituent may be ortho, meta or para, relative to the carbon atom bonded to the baron atom. When either or both $X_3$ and $X_4$ are a hydrocarbyl radical, each may be the same or a different aromatic or substituted-aromatic radical as are $Ar_1$ and $Ar_2$, or the same may be a straight or branched alkyl, alkenyl or alkynyl radical having from 1 to 20 carbon atoms, a cyclic hydrocarbon radical having from 5 to 8 carbon atoms or an alkyl-substituted cyclic hydrocarbon radical having from 6 to 20 carbon atoms. $X_3$ and $X_4$ may also, independently, be alkoxy or dialkylamido radicals wherein the alkyl portion of said alkoxy and dialkylamido radicals contains from 1 to 20 carbon atoms, hydrocarbyl radicals and organometalloid radicals having from 1 to 20 carbon atoms. As indicated supra, $Ar_1$ and $Ar_2$ may be linked to each other. Similarly, either or both of $Ar_1$ and $Ar_2$ could be linked to either $X_3$ or $X_4$. Finally, $X_3$ and $X_4$ may also be linked to each other through a suitable bridging group.

Illustrative, but not limiting, examples of boron compounds which may be used as a second component in the preparation of the improved catalysts of this invention are trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron and tri(n-butyl)ammonium tetra(o-tolyl)boron; N,N-dialkyl anilinium salts such as N,N-dimethylanilinium tetra(phenyl)boron, N,N-diethylanilinium tetra(phenyl)boron and N,N-2,4,6-pentamethylanilinium tetra(phenyl)boron; dialkyl ammonium salts such as di(i-propyl)ammonium tetra(pentafluorophenyl)boron and dicyclohexylammonium tetra(phenyl)boron; and triaryl phosphonium salts such as triphenylphosphonium tetra(phenyl)baron, tri(methylphenyl)phosphonium tetra(phenyl)boron and tri(dimethylphenyl)phosphonium tetra(phenyl)boron.

Similar lists of suitable compounds containing other metals and metalloids which are useful as second components could be made, but such lists are not deemed necessary to a complete disclosure. In this regard, it should be noted that the foregoing list is not intended to be exhaustive and other boron compounds that would be useful as well as useful compounds containing other metals or metalloids would be readily apparent, from the foregoing general equations, to those skilled in the art.

In general, and while most first components identified above may be combined with most second components identified above to produce an active olefin polymerization catalyst, it is important to continued polymerization operations that either the metal cation initially formed from the first component or a decomposition product thereof be a relatively stable catalyst. It is also important that the anion of the second compound be stable to hydrolysis when an ammonium salt is used. Further, it is important that the acidity of the second component be sufficient, relative to the first, to facilitate the needed proton transfer. Conversely, the basicity of the metal complex must also be sufficient to facilitate the needed proton transfer. Certain metallocene compounds - using bis(pentamethylcyclopentadienyl)hafnium dimethyl as an illustrative, but not limiting example - are resistant to reaction with all but the strongest Bronsted acids and thus are not suitable as first components to form the catalysts of this invention. In general, bis(cyclopentadienyl) metal compounds with substituted cyclopentadienyl carbon atoms which can be hydrolyzed by aqueous solutions can be considered suitable as first components to form the catalysts described herein.

With respect to the combination of first (metal-containing) component to second component to form a catalyst of this invention, it should be noted that the two compounds combined for preparation of the active catalyst must be selected so as to avoid transfer of a fragment of the anion, particularly an aryl group, to the metal cation, so as to form a catalytically inactive species. This is done by steric hindrance, resulting from substitutions on the cyclopentadienyl carbon atoms; substitutions on the aromatic carbon atoms of the anion may be used in addition. It follows, then, that metal compounds (first components) comprising perhydrocarbylsubstituted cyclopentadienyl radicals could be effectively used with a broader range of second compounds than could metal compounds (first components) comprising unsubstituted cyclopentadienyl radicals.

In general, the catalyst can be prepared by combining the two components in a suitable solvent at a temperature within the range from -100°C to 300°C. The catalyst may be used to polymerize $\alpha$-olefins and/or acetylenically unsaturated monomers having from 2 to 18 carbon ators and/or diolefins having from 4 to about 18 carbon atoms either alone or in combination. The catalyst may also be used to polymerize $\alpha$-olefins, diolefins and/or acetylenically unsaturated monomers in combination with other unsaturated monomers. In general, the polymerization may be accomplished at conditions well known in the prior art. It will, of course, be appreciated that the catalyst system will form in situ if the components thereof are added directly to the polymerization process and a suitable solvent or diluent, including condensed monomer, is used in said polymerization process. It is, however, preferred to form the catalyst in a separate step in a suitable solvent prior to adding the same to the polymerization step. While the catalysts do not contain pyrophoric species, the catalysts' components are sensitive to both moisture and oxygen and should be handled and transferred in an inert atmosphere such as nitrogen, argon or helium.

As indicated supra, the improved catalyst of the present invention will, preferably, be prepared in a suitable solvent or diluent. Suitable solvents or diluents include any of the solvents known in the prior art to be useful as solvents in the polymerization of olefins, diolefins and acetylenically unsaturated monomers. Suitable solvents, then, include, but are not necessarily limited to, straight and branched-chain hydrocarbons such as isobutane, butane, pentane, hexane, heptane and octane; cyclic and alicyclic hydrocarbons such as cyclohexane, cycloheptane, methylcyclohexane and methylcycloheptane and aromatic and alkyl-substituted aromatic compounds such as benzene, toluene and xylene. Suitable solvents also include liquid olefins which may act as monomers or comonomers including ethylene, propylene, butadiene, cyclopentene, 1-hexene, 3-methyl-1-pentene, 4-methyl-1-pentene, 1,4-hexadiene, 1-octene and 1-decene, Suitable solvents further include basic solvents not generally useful as polymerization solvents when conventional Ziegler-Natta type polymerization catalysts are used such as chlorobenzene.

While the inventors do not wish to be bound by any particular theory, it is believed that when the two compounds used to prepare the improved catalysts of the present invention are combined in a suitable solvent or diluent, all or a part of the cation of the second compound (the acidic proton) combines with one of the substituents on the metal containing (first component). In the case where the first component has a formula corresponding to that of general formula supra, a neutral compound is liberated, which neutral compound either remains in solution or is liberated as a gas. In this regard, it should be noted that if either $X_1$ or $X_2$ in the metal containing (first component) is a hydride, hydrogen gas may be liberated. Similarly, if either $X_1$ or $X_2$ is a methyl radical, methane may be liberated as a gas. In the cases where the first component has a formula corresponding to those of general formulae 2, 3 or 4, one of the substituents on the metal-containing (first) component is protonated but, in general, no substituent is liberated from the metal. It is preferred that the molar ratio of first component to second component be 1:1 or greater. The conjugate base of the cation of the second compound, if one remains, will be a neutral compound which will remain in solution or complex with the metal cation formed, though, in general, a second compound is chosen such that any binding of the neutral conjugate base to the metal cation will be weak or nonexistant. Thus, as the steric bulk of this conjugate base increases, it will, simply, remain in solution without interfering with the active catalyst. Similarly, if the cation of the second compound is a trialkyl ammonium ion, this ion will liberate a hydrogen atom to form gaseous hydrogen, or methane and the conjugate base of the cation will be a tertiary amine. In like fashion, if the cation were a hydrocarbyl-substituted phosphonium ion containing at least one reactive proton, as is essential to the present invention, the conjugate base of the cation would be a phosphine.

While still not wishing to be bound by any particular theory, it is also believed that as one of the metal containing (first component) substituents (a ligand) is liberated, the noncoordinating anion originally contained in the second compound used in the catalyst preparation combines with and stabilizes either the metal cation formed from the first component, formally having a coordination number of 3 and a +4 valence, or a decomposition product thereof. The metal cation and noncoordinating anion will remain so combined until the catalyst is contacted with one or more olefins, diolefins and/or acetylenically unsaturated monomers either alone or in combination with one or more other monomers or another neutral Lewis base. As indicated supra, the anion contained in the second compound must be sufficiently labile to permit rapid displacement by an olefin, diolefin or an acetylenically unsaturated monomer to facilitate polymerization.

The chemical reactions which occur in forming the catalysts of this invention may, when a preferred, boron containing compound is used as the second component, be represented by reference to the general formulae set forth herein as follows:

$$1.\ (A\text{-}Cp)MX_1X_2 + [L'\text{-}H]^+[BAr_1Ar_2X_3X_4]^- \rightarrow [(A\text{-}Cp)MX_1]^+[BAr_1Ar_2X_3X_4]^- + HX_2 + L' \text{ or } [(A\text{-}Cp)MX_2]^+[BAr_1Ar_2X_3X_4]^- + HX_1 + L'$$

$$2.\ (A\text{-}Cp)M\overline{X'_1X'_2} + [L'\text{-}H]^+[BAr_1Ar_2X_3X_4]^- \text{-->} [(A\text{-}Cp)M(\overline{X'_1X'_2}H)]^+[BAr_1Ar_2X_3X_4]^- + L' \text{ or } [(A\text{-}Cp)M(\overline{X'_2X'_1}H)]^+[BAr_1Ar_2X_3X_4]^- + L'$$

$$3.\ (A\text{-}Cp)ML + [L'\text{-}H]^+[BAr_1Ar_2X_3X_4]^- \rightarrow [(A\text{-}Cp)M(LH)]^+[BAr_1Ar_2X_3X_4]^- + L'$$

$$4.\ (Cp)(\overline{R\text{-}Cp^*)M}X_1 + [L'\text{-}H]^+[BAr_1Ar_2X_3X_4]^- \text{-->} [Cp(HR\text{-}Cp^*)MX_1]^+[BAr_1Ar_2X_3X_4]^- + L' \text{ or } [Cp(\overline{R\text{-}Cp^*)M}]^+[BAr_1Ar_2X_3X_4]^- + HX_1 + L'$$

In the foregoing reaction equations, the numbers correspond to the numbers set forth in combination with the general equations for useful metallocene compounds of zirconium or hafnium (first components). In general the stability and rate of formation of the products in the foregoing reaction equations, particularly the metal cation, will vary depending upon the choice of the solvent, the acidity of the $[L'\text{-}H]^+$ selected, the particular L', the anion, the temperature at which the reaction is completed and the particular dicyclopentadienyl derivative of the metal selected. Generally, the initially formed ion-pair will be an active polymerization catalyst.

In this invention the initially formed metal cation decomposes into one or more other catalytically active species.

The active catalyst species which have not been characterized, include active decomposition products, are of the same type as those which have been isolated and fully characterized or at least retain the essential ionic structure required for functioning as a catalyst. More particularly, it is believed that the active catalyst species which have not been isolated, including active decomposition products, are the same type as the isolated and characterized active catalyst species in that the these species contain a bis(cyclopentadienyl)metal center which center remains cationic, unsaturated and has a metal-carbon bond which is reactive with olefins, diolefins and acetylenically unsaturated compounds. The decomposition products may react with hydrogen gas to enter into a common state of equilibrium involving the cationic hydride complex, $[Cp'CpMH]^+X^-$.

This behavior is best exemplified in a peralkylcyclopentadienyl system wherein a tetraphenyl borate is used as the second component. For example, the reaction of $Cp'_2ZrMe_2$ (where $Cp' = C_5Me_5$) and $[Bu_3NH]^+[B(Ph'_4)]^-$ (where Ph' = phenyl or para-alkylphenyl with hydrogen or an alkyl group in the para-position) in toluene gives $[Cp'_2ZrMe]^+[B(Ph')_4]^-$ which is unstable and decomposes by loss of methane to give a single catalytically active product The deep red product has been fully characterized by NMR spectroscopy and single crystal x-ray diffraction. The general structure

of this zwitterionic catalyst of this type is shown below:

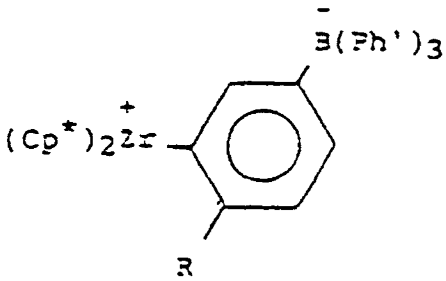

Wherein:

Cp* is a peralkyl-substituted cyclopentadienyl radical wherein each of said alkyl substitutions may be the same or a different $C_1$-$C_{20}$ alkyl radical, preferably the same or a different $C_1$-$C_6$ alkyl radical, most preferably the same or a different $C_1$-$C_4$ alkyl radical;
B is boron;
Zr is zirconium;
Ph' is a phenyl or alkyl-substituted phenyl radical and each of the 3 Ph's may be the same or different and the alkyl substitutions may be $C_1$-$C_{14}$, preferably $C_1$-$C_6$, most preferably $C_1$-$C_4$; and
R is hydrogen or an alkyl group having from 1 to 14 carbon atoms, preferably from 1 to 6 carbon atoms, most preferably from 1 to 4 carbon atoms.

Addition of excess hydrogen gas to a toluene solution containing the above-identified permethyl-substituted cyclopentadienyl zwitterionic catalyst causes a rapid reaction as evidenced by a color change from red to yellow, and, in concentrated solutions, the formation of a yellow precipitate. Removal of hydrogen from the system regenerates the original zwitterionic catalyst in high yield. While not wishing to be bound by any theory, it is believed that the reaction of hydrogen with the zwitterionic catalyst leads to the formation of $[Cp^*_2ZrH]^+[B(Ph')_4]^-$. The reversible nature of this reaction along with other spectroscopic evidence suggests that the hydride cation is in chemical equilibrium with the zwitterionic species.

Consistent with the foregoing, stable polymerization catalysts have been prepared when bis(permethylcyclopentadienyl)zirconium dimethyl has been reacted with tri(n-butyl)ammonium tetra(phenyl)boron, tri(n-butyl)ammonium tetra(p-tolyl)boron and tri(n-butyl)ammonium tetra(p-ethytphenyl)boron. A stable polymerization catalyst has also been prepared when bis(ethyltetramethylcyclopentadienyl)zirconium dimethyl was reacted with tri(n-butyl)ammonium tetra(p-tolyl)boron. In each of these cases, the stable polymerization catalyst was prepared by adding the reactants into a suitable aromatic solvent at a temperature within the range from 0°C to 100°C. Based on this and other information available to the inventor, it appears clear that stable zwitterionic polymerization catalysts can also be prepared using bis(perhydrocarbylcyclopentadienyl)zirconium dialkyls and dihydrides in combination with ammonium salts of an unsubstituted or p-substituted-tetra(aryl)boron anion.

In general, the stable catalyst formed by the method of this invention may be separated from the solvent and stored for subsequent use. The less stable catalyst, however, will, generally, be retained in solution until ultimately used in the polymerization of olefins, diolefins and/or acetylenically unsaturated monomers. Alternatively, any of the catalysts prepared by the method of this invention may be retained in solution for subsequent use or used directly after preparation as a polymerization catalyst. Moreover, and as indicated supra, the catalyst may be prepared in situ during a polymerization reaction by passing the separate components into the polymerization vessel where the components will contact and react to produce the improved catalyst of this invention.

When the ratio of first compound to second compound is 1:1, at concentrations below $10^{-5}$M, the catalyst is often not active for olefin polymerisation. While the inventors do not wish to be bound by any particular theory, it is believed that adventitious oxygen or moisture in the diluent or monomers may deactivate the catalyst. When the ratio of the first compound to the second compound is 2:1 to 10:1 or more, however, concentrations of the second component can be as low as $10^{-6}$M.

When first compounds containing hafnium are reacted with second compounds containing a metal or a metalloid such as boron and a less acidic ammonium cations - using tri(n-butyl)ammonium tetrakis(pentafluorophenyl) boron as an example - and the catalyst therefrom is used in the polymerization process of this invention, induction periods of 1 to 15 minutes or more can be observed before the uptake of monomer begins. This phenomenon is most pronounced when the concentration of the hafnium compound is below $10^{-4}$M and that of the second component is

below $10^{-5}$M; higher concentrations of catalyst solution often show no induction period. It can also be observed when first compounds containing zirconium are used when the concentration of the second component is $10^{-6}$ M or less. While the inventors do not wish to be bound by any particular theory, it is believed that the catalyst species formed decomposes in the polymerization process to form a catalytically inactive metal-containing compound and regenerating either the same or a different second component. This new second component activates any excess first component present to regenerate the active catalyst species of the present invention. While still not wishing to be bound by any particular theory, it is believed that increasing the concentration of the catalyst or using second components containing more acidic ammonium cations will either diminish the length of this induction period or eliminate it completely.

In the polymerization process of this invention, the molecular weight appears to be a function of both catalyst concentration and polymerization temperature and polymerization pressure. The polymers produced with the catalyst of this invention, when prepared in the absence of significant mass transport effects, will, generally, have relatively narrow molecular weight distributions.

Certain of the catalysts of this invention, particularly those based on hafnocenes - using the catalyst produced from the reaction of bis(cyclopentadienyl)hafnium dimethyl and the trisubstituted ammonium salt of tetra(pentafluorophenyl)boron as an example - when used as described herein for the polymerization and copolymerization of $\alpha$-olefins, diolefins, and/or acetylenically unsaturated monomers, in the absence of a chain transfer agent, can lead to the production of extremely high molecular weight polymers and copolymers having relatively narrow molecular weight distributions. In this regard, it should be noted that homopolymers and copolymers having molecular weights up to 2 x $10^6$ and molecular weight distributions within the range of 1.5 to 15 can be produced with the catalysts of this invention. The substituents on the cyclopentadienyl radicals, however, can exert a profound influence on polymer molecular weights.

Catalysts of this invention containing a first component which is either a pure enantiomer or the racemic mixture of two enantiomers of a rigid, chiral metallocene can polymerize prochiral olefins (propylene and higher $\alpha$-olefins) to isotactic polymers. Bis(cyclopentadienyl)metal compounds in which each of the cyclopentadienyl radicals is substituted and containing a covalent bridging group between the two cyclopentadienyl radicals are particularly useful for isotactic polymerizations of this type.

A particularly surprising feature of some of the catalysts of this invention, particularly those based on hafnocenes in combination with a second component comprising boron, is that when the catalysts of this invention are used to copolymerize $\alpha$-olefins, either alone or in combination with diolefins, the amount of higher molecular weight olefin or diolefin incorporated into the copolymer is significantly increased when compared to copolymers prepared with the more conventional Ziegler-Natta type catalysts and bis(cyclopentadienyl)zirconium catalysts. The relative rates of reaction of ethylene and higher $\alpha$-olefins with the aforementioned hafnium-based catalysts of this invention are much closer than with conventional Ziegler-Natta catalysts of the Group IV-B metals. The monomer distribution in copolymers prepared with the catalysts of this invention, particularly with the lower $\alpha$-olefins and lower diolefins, will range from near perfectly alternating to statistically random.

In general, catalysts can be selected so as to produce the polymer products which will be free of certain trace metals generally found in polymers produced with Ziegler-Natta type catalysts such as aluminum, magnesium, chloride. The polymer products produced with the catalysts of this invention should, then, have a broader range of applications than polymers produced with more conventional Ziegler-Natta type catalysts comprising a metal alkyl, such as an aluminum alkyl. The polymers produced with zwitterionic catalysts in the absence of hydrogen or other chain terminating reagents, contain predominantly internal rather than terminal unsaturation. In this regard, it should be noted that if the terminal carbon atom in the polymer chain were numbered one, the unsaturation contained in the polymers produced in the process of this invention would be 2,3 rather than the more traditional 1,2.

## PREFERRED EMBODIMENT OF THE INVENTION

In a preferred embodiment of the present invention, a bis(cyclopentadienyl)metal compound, said metal being selected from the Group consisting of zirconium and hafnium, said compound containing two, independently, substituted or unsubstituted cyclopentadienyl radicals and one or two lower alkyl substituents and/or one or two hydride substituents will be combined with a trisubstituted ammonium salt of either a substituted or unsubstituted tetra(aromatic) boron. Each of the trisubstitutions in the ammonium cation will be the same or a different lower alkyl or aryl radical. By lower alkyl is meant an alkyl radical containing from one to four carbon atoms. When the bis(cyclopentadienyl)metal compound used is a bis(perhydrocarbyl-substituted cyclopentadienyl)metal compound, an unsubstituted or partially substituted tetra(aromatic)boron salt may be used. Tri(n-butyl)ammonium tetra(phenyl)boron, tri(n-butyl)ammonium tetra(p-tolyl)boron and tri(n-butyl)ammonium tetra(p-ethylphenyl)boron are particularly preferred. The two components will be combined at a temperature within the range from 0°C to 100°C. The components will be combined, preferably, in an aromatic hydrocarbon solvent, most preferably toluene. Nominal holding times within the range from 10 seconds to 60 minutes will be sufficient to produce both the preferred and most preferred catalyst of this invention.

In a preferred embodiment, the catalyst, immediately after formation, will then be used to polymerize a lower α-olefin particularly ethylene or propylene, most preferably ethylene, at a temperature within the range from 0°C to 100°C and at a pressure within the range 1.03 to 34.45 bar (from 15 to 500 psig). In a most preferred embodiment of the present invention, the most preferred catalyst will be used either to homopolymerize ethylene or to copolymerize ethylene with a lower α-olefin having from 3 to 6 carbon atoms, thereby yielding a plastic or an elastomeric copolymer. In both the preferred and most preferred embodiments, the monomers will be maintained at polymerization conditions for a nominal holding time within the range from about 1 to about 60 minutes and the catalyst will be used at a concentration within the range from about $10^{-5}$ to about $10^{-1}$ moles per liter of solvent.

Having thus broadly described the present invention and a preferred and most preferred embodiment thereof, it is believed that the same will become even more apparent by reference to the following examples. It will be appreciated, however, that the examples are presented solely for purposes of illustration and should not be construed as limiting the invention. All of the examples were completed either under an argon blanket by standard Schlenk techniques or under a helium blanket in a Vacuum Atmospheres HE43-2 drybox. The solvents used in the experiments were rigorously dried under nitrogen by standard techniques. The boron and metallocene reagents used in the examples were either purchased or prepared following published techniques. The zwitterionic complexes (Examples 1, 4, 10 and 22) were characterized by solid state $^{13}$C NMR spectroscopy and solution $^{1}$H NMR spectroscopy. The tetra(p-ethylphenyl)boron zwitterionic derivative isolated in Example 10 was further characterized by single crystal x-ray crystallography.

EXAMPLE 1

In this example, a stable, isolable polymerization catalyst was prepared by combining 0.65 g of tri(n-butyl) ammonium tetra(phenyl)boron with 0.50 g of bis(pentamethylcyclopentadienyl)zirconium dimethyl. The combination was accomplished by first suspending the tri(n-butyl)ammonium tetra(phenyl)boron in 50 ml of toluene and then adding the bis(pentamethylcyclopentadienyl)zirconium dimethyl. The combination was accomplished at room temperature and contacting between the two compounds was continued for 1 hour. After 1 hour, an insoluble orange precipitate separated from solution leaving a clear mother liquor. The orange precipitate was isolated by filteration, washed three times with 20 ml of pentane and dried in-vacuo. 0.75 g of the orange precipitate was recovered. A portion of this product was analyzed and it was found to contain a single organometallic compound having the following general formula:

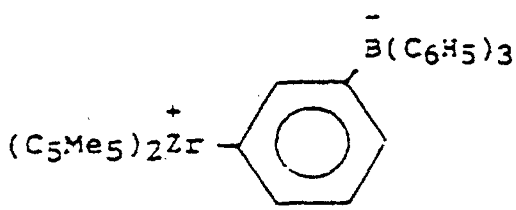

wherein Me is a methyl radical.

EXAMPLE 2

In this example, ethylene was polymerized by adding 0.05 g of the orange precipitate recovered in Example 1 to 20 ml of toluene at room temperature in a 100 ml side armed flask and then adding excess ethylene at atmospheric pressure while maintaining vigorous agitation. An immediate exotherm was detected and the formation of polyethylene observed as the addition of ethylene continued.

EXAMPLE 3

In this example, ethylene was polymerized by first suspending 0.05 g of the orange precipitate prepared in Example 1 to 20 ml of chlorobenzene in a 100 ml side armed flask and then adding excess ethylene at atmospheric pressure while maintaining agitation. An immediate exotherm was detected and the formation of polyethylene was observed as the addition of ethylene continued.

EXAMPLE 4

In this example, an active, isolable olefin polymerization catalyst was prepared by first suspending 0.75 g of

tri(n-butyl)ammonium tetra(p-tolyl)boron in 50 ml of toluene and then adding 0.52 g of bis(pentamethylcyclopentadienyl) zirconium dimethyl. The mixture was stirred at room temperature for 1 hour. After 1 hour, an insolable orange precipitate separated from solution. The orange precipitate was isolated by filtration, washed three times with 20 ml of pentane and dried in-vacuo. 0.55 g of the orange precipitate were recovered. The orange precipitate was analyzed and found to contain an orgartometallic compound having the following structure:

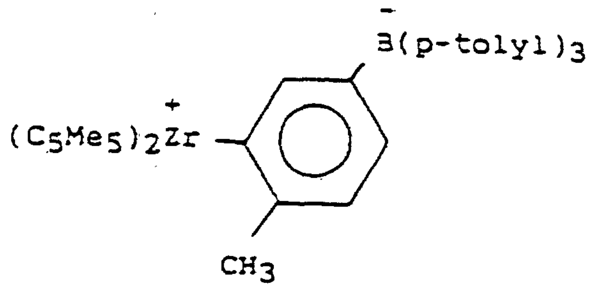

wherein Me is a methyl radical.

EXAMPLE 5

In this example, ethylene was polymerized at atmospheric pressure by passing ethylene into a 20 ml sample of crude reaction mixture from Example 4 in a 100 ml side armed flask. The ethylene was rapidly polymerized.

EXAMPLE 6

In this example, ethylene was polymerized at 40 psig by dissolving 0.02 g of the orange precipitate produced in Example 4 in 100 ml of toluene in a Fisher-Porter glass pressure vessel, heating the solution to 80°C and then passing ethylene into said solution at 40 psig for 20 minutes. 2.2 g of polyethylene were obtained and the average molecular weight of the polymer was 57,000. The polymer had a polydispersity of 2.5.

EXAMPLE 7

In this example, ethylene and acetylene were copolymerized by dissolving 0.05 g of the orange precipitate from Example 4 in toluene and then adding 2 ml of purified acetylene at atmospheric pressure in an NMR tube. An immediate color change from orange to yellow was noted. After five minutes, 5 ml of ethylene at atmospheric pressure were added to this mixture and an immediate exotherm was observed as was polymer formation.

EXAMPLE 8

In this example, an active, isolable olefin polymerization catalyst was produced by first suspending 1.20 g of tri(n-butyl)ammonium tetra(p-ethylphenyl)boron in 50 ml of toluene and then adding 0.76 g of bis(pentamethylcyclopentadienyl)zirconium dimethyl. The mixture was stirred at room temperature for 1 hour. After 1 hour, the reaction mixture was evaporated to dryness. The crude orange solid, which was produced, was recrystallized from hot toluene to give 1.0 g of orange-red crystals. A portion of this product was analyzed and confirmed to be an organometallic compound having the following structure:

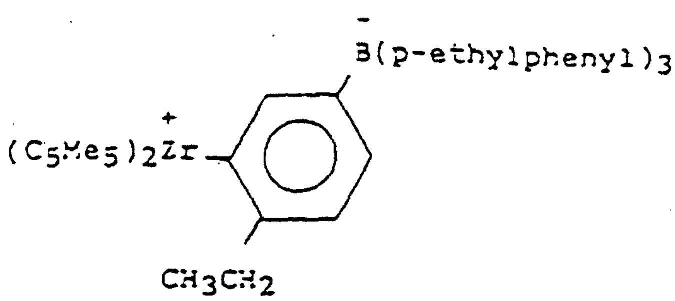

wherein Me is a methyl radical.

EXAMPLE 9

In this example, ethylene was polymerized by dissolving 0.10 g of the orange-red crystals from Example 8 in toluene and then placing the solution in a steel autoclave under nitrogen pressure. Ethylene at 6.89 bar (100 psig) was then introduced into the autoclave and the autoclave heated to 80°C with agitation. After 10 minutes, the reactor was vented to atmospheric pressure and opened. The yield of linear polyethylene was 27 g having a weight average molecular weight of about 52,000.

EXAMPLE 10

In this example, an olefin polymerization catalyst was prepared by combining 0.06 g of bis(1,3-bistrimethylsilylcyclopentadienyl)zirconium dimethyl, 0.05 g of N,N-dimethylanilinium tetra(phenyl)boron and 1 ml of deuterobenzene in an NMR tube and allowing the components to react. The NMR spectrum showed complete loss of starting materials after 20 minutes at room temperature. The reaction mixture was then divided into two portions, diluted with 20 ml toluene, and placed in 50 ml side armed flasks. Ethylene was added to one portion and propylene to the other. Rapid polymerization was observed in both cases.

EXAMPLE 11

In this example, an active olefin polymerization catalyst was prepared by first suspending 0.87 g of tri(n-butyl) ammonium tetra(p-tolyl)boron in 50 ml of toluene and then adding 0.50 g of (pentamethylcyclopentadienyl)(cyclopentadienyl)zirconium dimethyl. The reaction was stirred at room temperature for 18 hours to give a blue-green homogenous solution. The reaction mixture was dried in-vacuo, washed with 30 ml of pentane, and then redissolved in 100 ml of toluene. The resulting blue-green solution was filtered into a glass pressure vessel and stirred under 1.5 atmospheres of ethylene. An immediate exotherm and polymer formation was observed upon exposure of ethylene. The yield of polyethylene was 4.5 g after 15 minutes.

EXAMPLE 12

In this example, an olefin polymerization catalyst was prepared by first suspending 0.1 g of tri(n-butyl)ammonium tetra(p-ethylphenyl)boron in 5 ml of $d_6$-benzene and then adding 0.05 g of (pentamethylcyclopentadienyl)(cyclopentadienyl)zirconium dimethyl. The reaction was complete after 30 minutes. The green solution was then dried in-vacuo to give a green glassy solid. The crude green product was extracted with 20 ml of toluene. In separate experiments, the toluene extract was exposed to ethylene, to propylene and to a mixture of ethylene and propylene. In each case significant polymerization activity was observed.

EXAMPLE 13

In this example, an active, isolable olefin polymerization catalyst was prepared by first suspending 1.30 g of tri(n-butyl)ammonium tetra(p-tolyl)boron in 50 ml of toluene and then adding 1.00 g of bis(ethyltetramethylcyclopentadienyl)zirconium dimethyl. The mixture was stirred at room temperature for 1 hour. After 1 hour, an insolable orange precipitate separated from solution. The orange precipitate was isolated by filteration, washed three times with 20 ml of pentane and dried in-vacuo. 0.55 g of the orange precipitate were recovered. The orange precipitate was analyzed and found to contain an organometallic compound having the following structure:

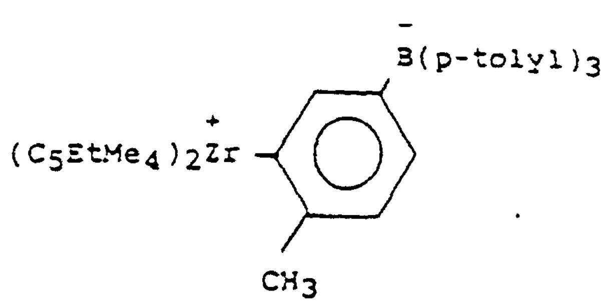

wherein Et is an ethyl radical and Me is a methyl radical.

EXAMPLE 14

In this example, 0.05 g of the orange precipitate produced in Example 13 was dissolved in 2 ml of deuterotoluene and placed in a 5 mm NMR tube and capped with a rubber septum. Ethylene (2 mt at 1 atm) was added via syringe and immediately polymerized.

EXAMPLE 15

In this example, a stirred 100 ml steel autoclave reaction vessel which was equipped to perform Ziegler-Natta polymerization reactions at pressures up to 2500 bar and temperatures up to 300° was used. The temperature of the cleaned reactor containing ethylene at low pressure was equilibrated at the desired reaction temperature of 160°. The catalyst solution was prepared by dissolving 259 mg of a zwitterionic catalyst (prepared from bis(ethyltetramethylcyclopentadienyl)zirconium dimethyl and tri(n-butyl)ammonium tetra(p-ethylphenyl)boron in 10.0 ml of distilled toluene under nitrogen. A 0.4 ml portion of this catalyst solution was transferred by low-pressure nitrogen into a constant-volume injection tube, which was held at 25°. Ethylene was pressured into the autoclave at a total pressure of 1500 bar. The reactor contents were stirred at 1000 rpm for 1 minute at which time the catalyst solution was rapidly injected into the stirring reactor with excess pressure. The temperature and pressure changes were recorded continuously for 120 seconds at which time the contents were rapidly vented, yielding the polymer. The reactor was washed with xylene to collect any polymer remaining inside and all polymer was dried in vacuo. The yield of polyethylene isolated was 0.56 g. This polymer had a weight-average molecular weight of 21,900, a molecular weight distribution of 10.6 and a density of 0.965 g/ml.

## Claims

1. A catalyst for polymerizing olefins, diolefins, and/or acetylenically unsaturated monomers, comprising a cation derived from a bis(cyclopentadienyl) zirconium or hafnium compound having substitutions on the cyclopentadienyl carbon atoms, and an anion of a single coordination complex having a plurality of lipophilic radicals covalently coordinated to and shielding a central formal charge bearing metal or metalloid atom, which anion is compatible with and non-coordinating towards the metal cation,

   the catalyst being formed from first and second components selected so as to avoid transfer of a fragment of the anion to the metal cation, so forming a catalytically inactive species, the transfer being avoided by steric hindrance resulting from substitutions on the cyclopentadienyl carbon atoms with the provisos that

   the catalyst is not formed from a peralkyl substituted cyclopentadienyl system and a tetraphenyl borate and

   the catalyst does not comprise a non-coordinating anion substituted on aromatic carbon atoms so as to avoid a transfer of a fragment of the anion to the metal cation.

2. A zwitterion having the following general structural formula:

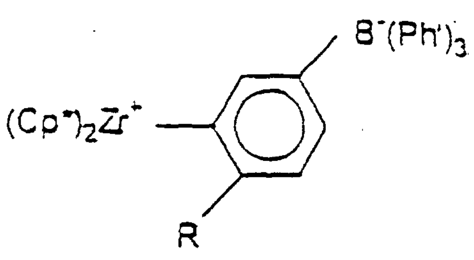

   wherein:

   Cp' is a peralkyl-substituted cyclopentadienyl radical wherein each of said alkyl substitutions may be the same or a different C1-C20 alkyl radical;
   B is boron;
   Zr is zirconium;

Ph' is a phenyl or alkyl-substituted phenyl radical and each of the 3 Ph's may be the same or different and the alkyl substitutions may be C1-C14; and
R is hydrogen or an alkyl group having from 1 to 14 carbon atoms.

**3.** A zwitterion according to daim 2 which has one of the formulae:

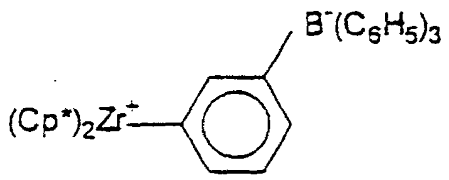

wherein:

Cp' is a (pentamethylcyclopentadienyl) radical;

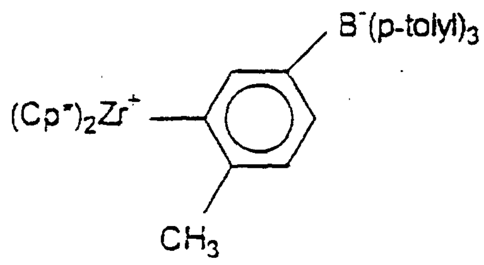

wherein Cp' is (pentamethylcyclopentadienyl) radical;

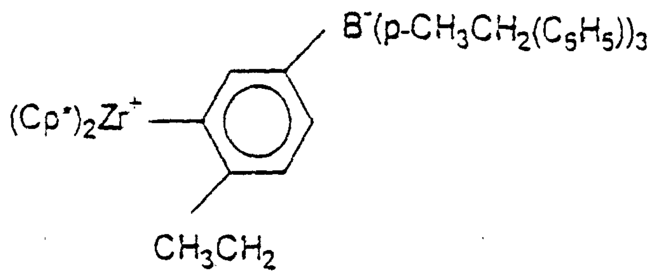

wherein Cp' is a (pentamethylcyclopentadienyl) radical; or

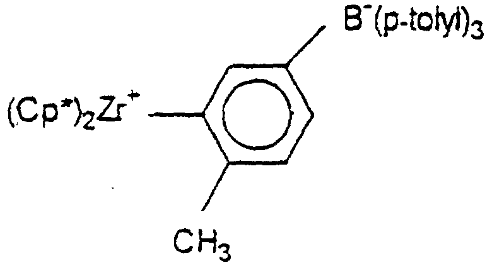

wherein Cp' is an (ethyltetramethylcyclopentadienyl) radical.

4. A method for preparing the catalyst according to claim 1 or claim 2, comprising reacting, in a suitable solvent or diluent at a temperature of -100 to 300°C. a bis(cyclopentadienyl) group IV B compound having substitutions on the cyclopentadienyl carbon atoms with an ion exchange compound so as to combine at least one ligand of the metal compound with the ion exchange compound or at least a portion thereof, thereby generating the catalyst.

5. A process for polymerising olefins, diolefins, and/or acetylenically unsaturated monomers, comprising contacting olefins, diolefins, and/or acetylenically unsaturated monomers with the catalyst according to claim 1 or claim 2, and maintaining at polymerisation conditions so as to yield homopolymer or copolymer products.

## Patentansprüche

1. Katalysator zum Polymerisieren von Olefinen, Diolefinen und/oder acetylenisch ungesättigten Monomeren, der ein Kation, das von einer Bis(cyclopentadienyl)-Zirconium- oder -Hafniumverbindung mit Substitutionen an den Cyclopentadienyl-Kohlenstoffatomen abgeleitet ist, und ein Anion eines einzelnen Koordinationskomplexes umfasst, der eine Vielzahl von lipophilen Resten aufweist, die kovalent an ein zentrales, Formalladung tragendes Metall- oder Metalloidatom koordiniert sind und dieses abschirmen, wobei das Anion mit dem Metallkation verträglich ist und gegenüber diesem nicht-koordinierend ist, wobei
der Katalysator aus ersten und zweiten Komponenten gebildet ist, die so gewählt sind, dass die Übertragung eines Fragments des Anions auf das Metallkation vermieden wird, wodurch eine katalytisch inaktive Spezies gebildet würde, wobei die Übertragung durch sterische Hinderung vermieden wird, die aus Substitutionen an den Cyclopentadienyl-Kohlenstoffatomen resultiert, mit den Maßgaben, dass
der Katalysator nicht aus einem peralkylsubstituierten Cyclopentadienylsystem und einem Tetraphenylborat gebildet ist und
der Katalysator kein nicht-koordinierendes Anion umfasst, das an aromatischen Kohlenstoffatomen substituiert ist, um so eine Übertragung eines Fragments des Anions auf das Metallkation zu vermeiden.

2. Zwitterion mit der folgenden allgemeinen Strukturformel

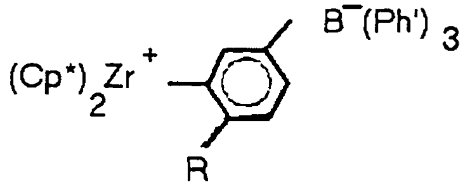

, in der
Cp* ein peralkylsubstituierter Cyclopentadienylrest ist, wobei jede der Alkylsubstitutionen der gleiche oder ein unterschiedlicher $C_1$- bis $C_{20}$-Alkylrest sein kann,
B Bor ist,
Zr Zirconium ist,
Ph' ein Phenyl- oder alkylsubstituierter Phenylrest ist und jeder der 3 Ph's gleich oder unterschiedlich sein kann und die Alkylsubstitutionen $C_1$ bis $C_{14}$ sein können, und
R Wasserstoff oder eine Alkylgruppe mit 1 bis 14 Kohlenstoffatomen ist.

3. Zwitterion nach Anspruch 2 mit einer der folgenden Formeln

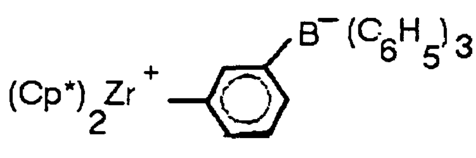

in der
Cp* ein (Pentamethylcyclopentadienyl)rest ist,

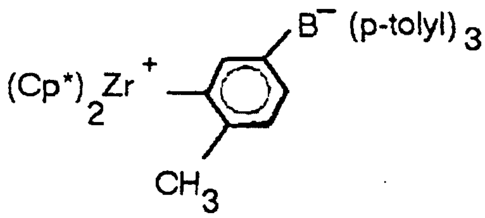

in der
Cp* ein (Pentamethylcyclopentadienyl)rest ist;

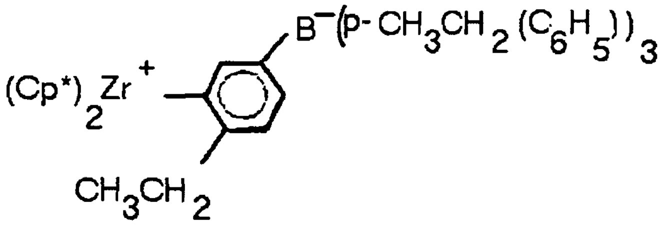

in der
Cp* ein (Pentamethylcyclopentadienyl)rest ist, oder

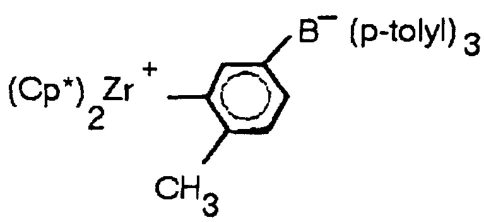

in der
Cp* ein (Ethyltetramethylcyclopentadienyl)rest ist.

**4.** Verfahren zur Herstellung des Katalysators nach Anspruch 1 oder Anspruch 2, bei dem in geeignetem Lösungsmittel oder Verdünnungsmittel bei einer Temperatur von -100 bis 300°C eine Bis(cyclopentadienyl)-Gruppe IV B Verbindung mit Substitutionen an den Cyclopentadienyl-Kohlenstoffatomen mit einer Ionenaustauschverbindung umgesetzt wird, um so mindestens einen Liganden der Metallverbindung mit der Ionenaustauschverbindung oder mindestens einem Teil derselben zu kombinieren, wodurch der Katalysator erzeugt wird.

**5.** Verfahren zum Polymerisieren von Olefinen, Diolefinen und/oder acetylenisch ungesättigten Monomeren, bei dem Olefine, Diolefine und/oder acetylenisch ungesättigte Monomere mit dem Katalysator gemäß Anspruch 1 oder Anspruch 2 kontaktiert und auf Polymerisationsbedingungen gehalten werden, um Homopolymer- oder Copolymerprodukte zu ergeben.

**Revendications**

**1.** Catalyseur pour la polymérisation d'oléfines, de dioléfines et/ou de monomères à insaturation acétylénique, comprenant un cation dérivé d'un composé bis-(cyclopentadiénylique) de zirconium ou d'hafnium portant des substituants sur les atomes de carbone du groupe cyclopentadiényle, et un anion constitué d'un complexe de coordination simple ayant une pluralité de radicaux lipophiles en coordination covalente avec, et faisant écran à, un atome de métal ou métalloïde central formellement porteur de charge, anion qui est compatible avec et non coordinant vis-à-vis du cation métallique,

le catalyseur formé à partir des premier et second constituants étant choisi de manière à éviter le transfert d'un fragment de l'anion au cation métallique, en formant ainsi une entité catalytiquement inactive, le transfert étant évité par un encombrement stérique résultant de substitutions sur les atomes de carbone du groupe cyclopentadiényle, sous réserve que

le catalyseur ne soit pas formé à partir d'un système cyclopentadiénylique à substituant peralkyle et d'un tétraphénylborate, et

le catalyseur ne comprenne pas un anion non coordinant comme substituant sur des atomes de carbone aromatiques de manière à éviter un transfert d'un fragment de l'anion au cation métallique.

**2.** Zwitterion répondant à la formule structurale générale suivante :

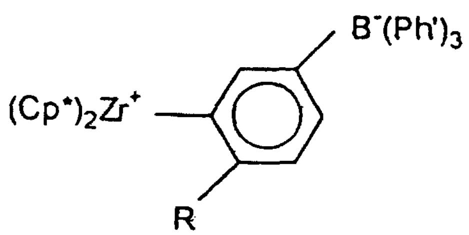

dans laquelle

Cp* représente un radical cyclopentadiényle à substituant peralkyle dans lequel lesdits substituants alkyle peuvent être identiques ou différents et représentent chacun un radical alkyle en $C_1$ à $C_{20}$ ;

B représente le bore ;

Zr représente le zirconium ;

Ph' représente un radical phényle ou phényle à substituant alkyle et les trois radicaux Ph' peuvent être identiques ou différents et les substituants alkyle peuvent être des substituants alkyle en $C_1$ à $C_{14}$, ; et

R représente l'hydrogène ou un groupe alkyle ayant 1 à 14 atomes de carbone.

**3.** Zwitterion suivant la revendication 2, qui répond à l'une des formules :

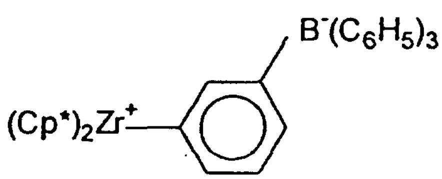

dans laquelle :

Cp* représente un radical (pentaméthylcyclopentadiényle) ;

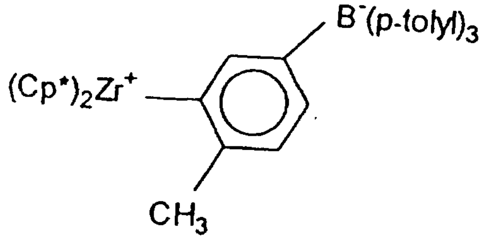

dans laquelle
Cp* représente un radical (pentaméthylcyclopentadiényle) ;

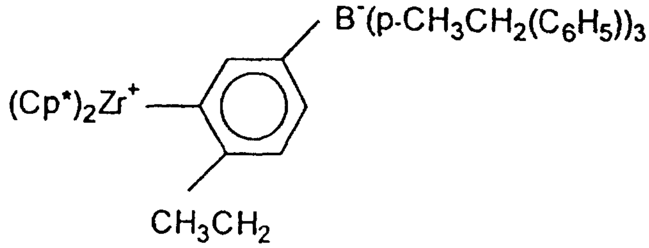

dans laquelle
Cp* représente un radical (pentaméthylcyclopentadiényle)

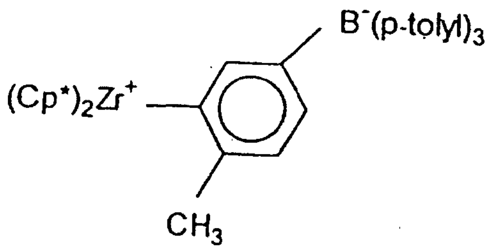

dans laquelle Cp* représente un radical (éthyltétraméthylcyclopentadiényle).

**4.** Procédé pour la préparation du catalyseur suivant la revendication 1 ou la revendication 2, comprenant la réaction, dans un solvant ou diluant convenable à une température comprise dans l'intervalle de -100 à 300°C, d'un composé bis-(cyclopentadiénylique) d'élément du Groupe IV-B portant des substituants sur les atomes de carbone du groupe cyclopentadiényle avec un composé échangeur d'ions, de manière à associer au moins un ligand du composé métallique au composé échangeur d'ions ou au moins une de ses parties, en engendrant ainsi le catalyseur.

**5.** Procédé pour la polymérisation d'oléfines, de dioléfines et/ou de monomères à insaturation acétylénique, comprenant la mise en contact d'oléfines, de dioléfines et/ou de monomères à insaturation éthylénique avec le catalyseur suivant la revendication 1 ou la revendication 2 et le maintien dans des conditions de polymérisation de manière à obtenir des produits homopolymères ou copolymères.